# EUROPEAN PATENT APPLICATION

(11) **EP 1 703 577 A1**
(43) Date of publication of application: **20.09.2006**
(21) Application number: 04820308.7
(22) Date of filing: 10.12.2004
(51) Int. Cl.: H01M 8/04, H01M 8/06

(54) **METHOD OF OPERATING FUEL CELL SYSTEM AND FUEL CELL SYSTEM**

(30) Priority: 11.12.2003 JP 2003413324
(71) Applicant: EBARA BALLARD CORPORATION, Tokyo 144-0042 (JP)
(72) Inventor: SU, Qingquan, c/o Ebara Ballard Corporation, Tokyo 144-0042 (JP); HORIE, Toshihiro, c/o Ebara Ballard Corporation, Tokyo 144-0042 (JP); ANDO, Masaki, c/o Ebara Ballard Corporation, Tokyo 144-0042 (JP); HAGA, Takahide, c/o Ebara Ballard Corporation, Tokyo 144-0042 (JP)
(74) Representative: HOFFMANN EITLE
(86) International application number: PCT/JP2004/018496
(87) International publication number: WO 2005/057705

(57) **Abstract**

To provide a fuel cell power generation system which has no assist combustion system and thus is simple in structure and a method for starting the fuel cell power generation system and controlling the operation of the fuel cell power generation system, in order to provide a fuel cell power generation system which operates stably with a high reliability.

In a fuel cell power generation system having a reforming section 5 for reforming a raw material fuel m to produce reformate r; a combustion section 4 for burning the raw material fuel to heat the reforming section; carbon monoxide reduction section 6 and 7 for reducing the content of carbon monoxide in the reformate to produce carbon monoxide reduced gas g; and a fuel cell 30 which uses the carbon monoxide reduced gas as fuel gas, the raw material fuel is supplied to the combustion section to heat the reforming section to a predetermined temperature, supply of the raw material fuel to the combustion section is stopped, the raw material fuel is supplied to the reforming section to produce reformate, the reformate is introduced into the carbon monoxide reduction section to heat the carbon monoxide reduction section, and the carbon monoxide reduced gas generated in the carbon monoxide reduction section is introduced into the fuel cell to generate electric power.

## Description

### Technical Field

The-present invention relates to a fuel cell system and, more particularly, to methods for starting and controlling a fuel cell system.

### Background Art

There are fuel cell power generation systems which generate electricity through an electrochemical reaction between hydrogen-rich fuel gas generated by reforming a raw material fuel such as city gas, LPG, digestion gas, methanol, GTL or kerosene and supplied to an anode electrode (fuel electrode) of a fuel cell and oxygen-containing oxidant gas such as air supplied to an air electrode of the fuel cell. Such systems should operate in a stable way. It is, therefore, necessary to construct a system configuration which ensures stable operation of the system against disturbances. However, when the system configuration which ensures stable operation of the system is complicated, it may rather increase the causes of disturbances and degrade the reliability and economy of the entire system.

A reforming device for reforming the raw material fuel must be heated at a prescribed temperature since the reforming reaction is an endothermic reaction. Conventional fuel cell power generation systems have an assist combustion means for supplying some of the raw material fuel to a combustion section of a reforming device as auxiliary fuel. The amount of assist combustion is increased or decreased in response to a change in the temperature in the reforming section caused by a disturbance such as the pointing error of a raw material fuel flow meter to maintain the combustion section and the reforming section at prescribed temperatures for stable operation of the fuel cell power generation system.

### Disclosure of the Invention

### Problem to be Solved by the Invention

However, since an assist fuel supply section and so on are required for assist combustion, the system configuration is unavoidably complicated and the power consumption is large. In a small-scale power generation system such as a fuel cell power generation system for household use with a power generation capacity of 1 to several kW, the amount of combustion in the assist combustion is so small that an advanced assist fuel supply means which can constantly and accurately deliver the fuel at a very minute flow rate is required, especially when the raw material fuel is a liquid fuel. When the fuel cannot be constantly and accurately delivered at a minute flow rate, the assist combustion itself may be a disturbance or increase causes of disturbances. In addition, the assist combustion, in which raw material fuel is burned, tends to generate NOx or soot, especially when the raw material fuel is a liquid fuel, and is undesirable from the environmental point of view.
It is, therefore, an object of the present invention is to provide a fuel cell power generation system which has no assist combustion system and thus is simple in structure and methods for starting the fuel cell power generation system and controlling the operation of the fuel cell power generation system, in order to provide a high-reliability fuel cell power generation system which operates stably.

### Means for Solving the Problem

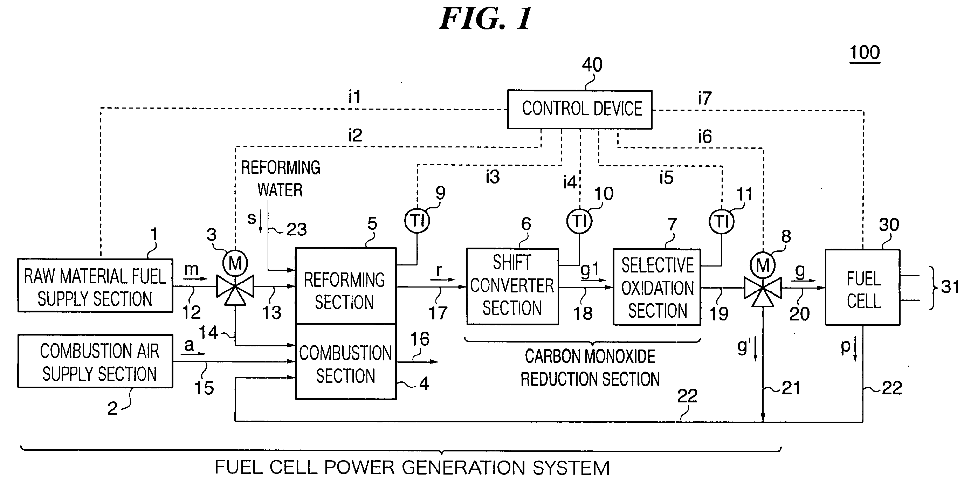

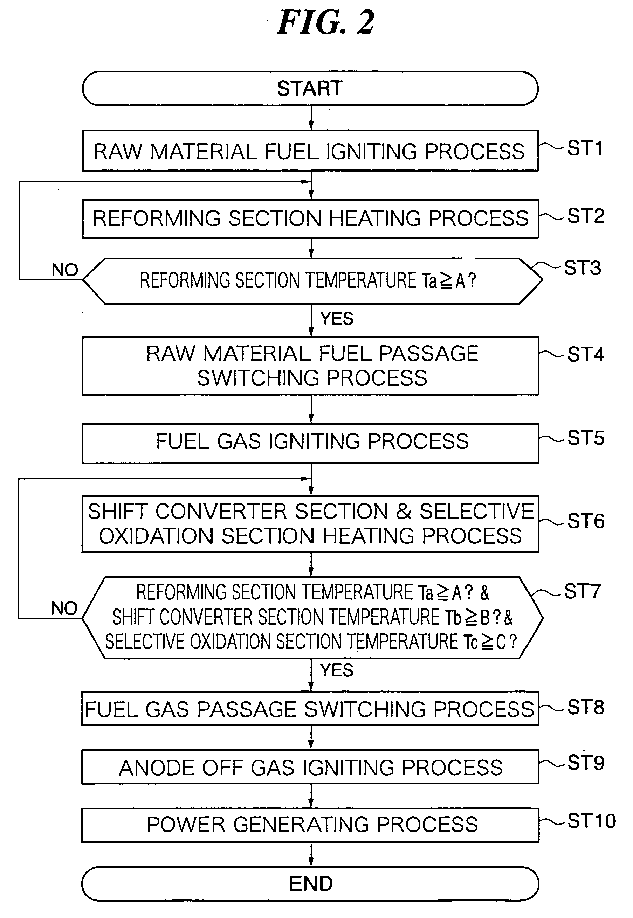

In order to accomplish the above-mentioned object, a method for operating a fuel cell power generation system according to the present invention is, as shown in FIGs. 1 and 2 for example, the method for operating the fuel cell power generation system 100 having a reforming section 5 for reforming a raw material fuel m to produce reformate(reformed gas) r; a combustion section 4 for burning the raw material fuel m to heat the reforming section 5; a carbon monoxide reduction section 6,7 for reducing a content of carbon monoxide in the reformate r to produce carbon monoxide reduced gas g; and a fuel cell 30 which uses the carbon monoxide reduced gas g as fuel gas, the method comprising: a first preheating process (step ST2) of supplying the raw material fuel m to the combustion section 4 to heat the reforming section 5 to a predetermined temperature; a second preheating process (step ST6), following the first preheating process (step ST2), including the steps of stopping the supply of the raw material fuel m to the combustion section 4 (step ST4), supplying the raw material fuel m to the reforming section 5 to produce reformate r, and introducing the reformate r to the carbon monoxide reduction section 6, 7 to heat the carbon monoxide reduction section 6,7; and a power generation process (step ST10), after the second preheating process (step ST6), of introducing the carbon monoxide reduced gas g generated in the carbon monoxide reduction section 6,7 to the fuel cell 30 to generate electric power.

In this configuration, the fuel cell power generation system without an assist combustion system can be started by supplying the raw material fuel to the combustion section to heat the reforming section, shift-converting the raw material fuel supplied to the reforming section into reformate using the heat accumulated in the reforming section heated, and heating the carbon monoxide reduction section with the reformate to produce carbon monoxide reduced gas to start power generation. Since the fuel cell power generation system does not have an assist combustion system and since the raw material fuel is supplied to the combustion section and directly burned therein only in the first preheating process, the raw material fuel is burned for only a short period of time and generation of NOx or soot, which are generated when the raw material fuel is burned, can be suppressed. Therefore, there can be obtained an environmentally friendly method for operating a fuel cell system.

A method for operating a fuel cell power generation system according to the present invention may be, as shown in FIGs. 1 and 2 for example, the operation method for the fuel power generation system 100, wherein process flow proceeds from the second preheating process (step ST6) to the power generation process (step ST10) when a temperature of the carbon monoxide reduction section 6,7 becomes equal to or higher than a predetermined value (step ST7).

In this configuration, carbon monoxide reduced gas produced after the carbon monoxide reduction section has been preheated to a predetermined temperature and has become able to reduce carbon monoxide is supplied to the fuel cell. Therefore, the power generation efficiency of the fuel cell is not degraded by carbon monoxide.

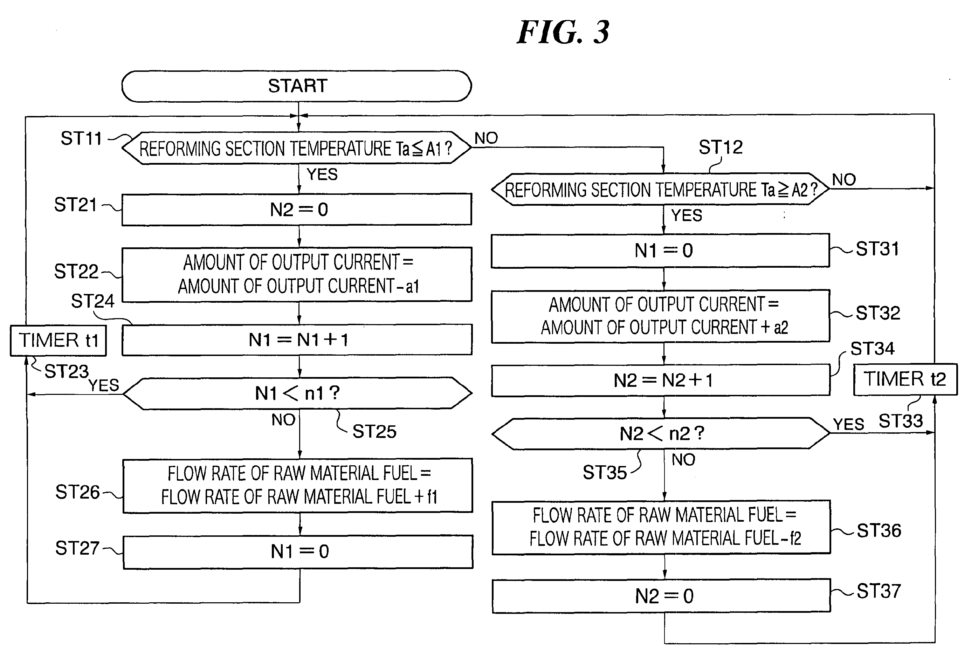

In order to accomplish the above-mentioned object, a method for operating a fuel cell power generation system according to the present invention is, as shown in FIGs. 1 and 3 for example, the method for operating the fuel cell power generation sysytem 100 having a raw material fuel supply section 1 for supplying a raw material fuel m; a reforming section 5 for reforming the raw material fuel m to produce reformate r; a carbon monoxide reduction section 6,7 for reducing a content of carbon monoxide in the reformate r to produce carbon monoxide reduced gas g; a fuel cell 30 which uses the carbon monoxide reduced gas g as fuel gas; and a combustion section 4 for burning off gas p from the fuel cell 30 to heat the reforming section 5, the method comprising: a reforming section temperature comparing process (steps ST11 and ST12) including the steps of detecting a temperature in the reforming section 5 and comparing the detected temperature with predetermined first temperature A1 and predetermined second temperature A2; a current decreasing process (step ST22) for decreasing an output current from the fuel cell 30 when the detected temperature Ta is equal to or lower than the first temperature Ta in the reforming section temperature comparing process (step ST11) and maintaining the output current for a predetermined time period t1 after the output current has been decreased (step ST23) ; and a current increasing process (step ST32) of increasing the output current from the fuel cell 30 when the detected temperature is equal to or higher than the second temperature in the reforming section temperature comparing process (step ST12) and maintaining the output current for a predetermined time period t2 after the output current has been increased (step ST33).

In this configuration, when the temperature in the reforming section becomes equal to or lower than a predetermined first temperature, the output current from the fuel cell is decreased. Then, the hydrogen content in the off gas from the fuel cell increases, and the amount of heat produced by the combustion in the combustion section increases. As a result, the reforming section is heated more and the temperature in the reforming section increases. When the temperature in the reforming section becomes equal to or higher than a predetermined second temperature, the output current from the fuel cell is increased. Then, the hydrogen content in the off gas from the fuel cell decreases, and the amount of heat produced by the combustion in the combustion section decreases. As a result, the temperature in the reforming section decreases. In addition, since the output current is not further varied for a predetermined time period after the output current has been increased or decreased, the system is prevented from becoming unstable.

A method for operating a fuel cell power generation system according to the present invention may, as shown in FIG. 3 for example, in the method for operating a fuel cell power generation system 100 further comprise: a fuel increasing process (step ST26) of increasing the supply amount of the raw material fuel m from the raw material fuel supply section 1 when a number of consecutive times N1 the current decreasing process has been carried out reaches a predetermined value n1; and a fuel decreasing process (step ST36) of decreasing the supply amount of the raw material fuel m from the raw material fuel supply section 1 when a number of consecutive times N2 the current increasing process has been carried out reaches a predetermined value n2.

In this configuration, when the temperature in the reforming section cannot become a predetermined value even when the output current from the fuel cell is increased or decreased by a predetermined integrated value (n1 or n2 times the amount to be increased or decreased in one process), the amount of raw material fuel is increased or decreased by an amount corresponding to the predetermined integrated value to adjust the temperature in the reforming section to the predetermined value. Therefore, the output current, in other words, the output power, is maintained within a certain range and the system can operate stably.

In order to accomplish the above-mentioned object, a fuel cell power generation system according to the present invention comprises, as shown in FIG. 1 for example, a raw material fuel supply section 1 for supplying a raw material fuel m; a reforming section 5 for reforming the raw material fuel m to produce reformate r; a carbon monoxide reduction section 6,7 for reducing a content of carbon monoxide in the reformate to produce carbon monoxide reduced gas g; a fuel cell 30 which uses the carbon monoxide reduced gas g as fuel gas; a combustion section 4 for burning the raw material fuel m, the carbon monoxide reduced gas g or off gas p from the fuel cell to heat the reforming section 5; a passage 12,14 through which the raw material fuel m is supplied to the combustion section 4; a passage 12,13 through which the raw material fuel m is supplied to the reforming section 5; a passage 19,20 through which the carbon monoxide reduced gas g is supplied to the fuel cell 30; a passage 21,22 through which the carbon monoxide reduced gas g is supplied to the combustion section 4; a passage 22 through which the off gas p from the fuel cell 30 is supplied to the combustion section 4; a first passage-switching means 3 for switching between the passage 14 through which the raw material fuel m is supplied to the combustion section 4 and the passage 13 through which the raw material fuel m is supplied to the reforming section 5; and a second passage-switching means 8 for switching between the passage 20 through which the carbon monoxide reduced gas g is supplied to the fuel cell 30 and the passage 21 through which the carbon monoxide reduced gas g is supplied to the combustion section 4.

In this configuration, the raw material fuel can be supplied to the reforming section to produce reformate, by switching the first passage-switching means after the raw material fuel has been supplied to the combustion section to heat the reforming section to a predetermined temperature. Since the supply of fuel to the combustion section is stopped after the first passage-switching means has been switched until the supply of the carbon monoxide reduced gas to the combustion section is started, the combustion section is once extinguished and the supply of heat to the reforming section is stopped. However, since the temperature in the reforming section is adjusted to a predetermined temperature before the switching so that the temperature in the reforming section cannot be lowered to a temperature at which a reforming reaction does not occur and since the period for which the supply of fuel is stopped is short, the reforming reaction continues. Also, in the fuel cell power generation system, the reformate introduced into the carbon monoxide reduction section to heat the carbon monoxide reduction section is supplied to the combustion section before the temperature in the carbon monoxide reduction section becomes sufficiently high, and, when the temperature in the carbon monoxide reduction section becomes sufficiently high, the second passage-switching means is switched to introduce the carbon monoxide reduced gas into the fuel cell to start power generation. Since the supply of fuel to the combustion section is stopped after the second passage-switching means has been switched until the supply of off gas from the fuel cell to the combustion section is started, the combustion section is once extinguished and the supply of heat to the reforming section is stopped. However, since the temperature in the reforming section is adjusted to a predetermined temperature before the switching so that the temperature in the reforming section cannot be lowered to a temperature at which a reforming reaction does not occur and since the period for which the supply of fuel is stopped is short, the reforming reaction continues. Since the fuel cell power generation system has no assist combustion system and since raw material fuel is supplied to the combustion section and directly burned therein only in the first preheating process, raw material fuel is burned for only a short period of time and generation of NOx or soot, which are generated when raw material fuel is burned, can be suppressed. Therefore, there can be obtained an environmentally friendly fuel cell power generation system.

Moreover, a fuel cell power generation system according to the present invention may, as shown in FIG. 1 for example, in the fuel power generation system 100, further comprise: a reforming section temperature detector 9 for detecting a temperature in the reforming section 5; a carbon monoxide reduction section temperature detector 10,11 for detecting a temperature in the carbon monoxide reduction section 6,7; and a control device 40 having a storage section for storing first, second and third temperatures to be compared with the temperature detected by the reforming section temperature detector 9 and a fourth temperature to be compared with the temperature detected by the carbon monoxide reduction section temperature detector 10,11, and a control section which, at start-up, conducts control to carry out the steps of stopping supply of the raw material fuel m to the combustion section 4, supplying the raw material fuel m to the reforming section 5 to produce reformate r, and introducing the reformate r to the carbon monoxide reduction section 6,7 to heat the carbon monoxide reduction section 6,7 when the temperature detected by the reforming section temperature detector 9 becomes equal to or higher than the third temperature after supplying the raw material fuel m to the combustion section 4, and the step of introducing the carbon monoxide reduced gas g produced in the carbon monoxide reduction section 6,7 to the fuel cell 30 to start power generation when the temperature detected by the carbon monoxide reduction section temperature detector 10,11 becomes equal to or higher than the fourth temperature; and which, during normal operation, conducts control to carry out the steps of decreasing an output current from the fuel cell 30 and maintaining the output current for a predetermined time period after the step of decreasing the output current when the temperature detected by the reforming section temperature detector 9 is equal to or lower than the first temperature, the steps of increasing the output current from the fuel cell 30 and maintaining the output current for a predetermined time period after the step of increasing the output current when the temperature detected by the reforming section temperature detector 9 is equal to or higher than the second temperature, and the steps of increasing or decreasing supply amount of the raw material fuel m from the raw material fuel supply section 1 when a number of consecutive times the output current has been decreased or increased reaches a predetermined value.

In the fuel cell power generation system constituted as described above, at the time of start-up, the control device conducts control to supply raw material fuel to the combustion section to heat the reforming section, to switch the first passage-switching means to supply raw material fuel to the reforming section to produce reformate and to introduce the reformate to the carbon monoxide reduction section to heat the carbon monoxide reduction section when the temperature detected by the reforming section temperature detector becomes equal to or higher than the third temperature, and to introduce carbon monoxide reduced gas to the fuel cell to start power generation when the temperature in the carbon monoxide reduction section becomes equal to or higher than the fourth temperature. Also, during normal operation, the control device conducts control to decrease the output current from the fuel cell to increase the temperature in the reforming section when the temperature in the reforming section becomes equal to or lower than the first temperature, to increase the output current from the fuel cell to decrease the temperature in the reforming section when the temperature in the reforming section becomes equal to or higher than the second temperature, and to increase or to decrease the supply amount of raw material fuel when the temperature in the reforming section cannot become a predetermined value even when the output current from the fuel cell has been increased or decreased a predetermined number of consecutive times.

The basic Japanese Patent Application No. 2003-413324 filed on December 11, 2003 is hereby incorporated in its entirety by reference into the present application.
The present invention will become more fully understood from the detailed description given hereinbelow. The other applicable fields will become apparent with reference to the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description. The applicant has no intention to give to public any disclosed embodiments. Among the disclosed changes and modifications, those which may not literally fall within the scope of the present claims constitute, therefore, a part of the present invention in the sense of doctrine of equivalents.
The use of the terms "a" and "an" and "the" and similar referents in the context of the specification and claims are to be construed to cover both the singular and the plural, unless otherwise indicated herein or clearly contradicted by context. The use of any and all examples, or exemplary language (e.g., "such as") provided herein, is intended merely to better illuminate the invention and does not pose a limitation on the scope of the invention unless otherwise claimed.

### Effects of the Invention

According to the present invention, there can be provided a simple-structure, high-reliability and environmentally-friendly fuel cell power generation system which can be started without an assist combustion system and can operate stably against disturbances and a method for operating the fuel cell power generation system.

### Brief Description of Drawings

FIG. 1 is a block diagram illustrating a fuel cell power generation system as an embodiment of the present invention.
FIG. 2 is a flowchart illustrating a method for controlling the fuel cell power generation system as an embodiment of the present invention at start-up.
FIG. 3 is a flowchart illustrating a method for controlling the fuel cell power generation system as an embodiment of the present invention during normal operation.

### Description of Reference Numerals

- 1:: raw material fuel supply section
- 2:: combustion air supply section
- 3:: three-way valve (first passage-switching means)
- 4:: combustion section
- 5:: reforming section
- 6:: shift converter section (carbon monoxide reduction section)
- 7:: selective oxidation section (carbon monoxide reduction section)
- 8:: three-way valve (second passage-switching means)
- 9:: reforming section temperature detector
- 10:: shift converter section temperature detector (carbon monoxide reduction section temperature detector)
- 11:: selective oxidation section temperature detector (carbon monoxide reduction section temperature detector)
- 12:: raw material fuel discharge pipe
- 13:: raw material fuel supply pipe
- 14:: raw material fuel combustion pipe
- 15:: oxidant gas pipe
- 16:: combustion section exhaust pipe
- 17:: reformate pipe
- 18:: shift-converted gas pipe
- 19:: fuel gas discharge pipe
- 20:: fuel gas supply pipe
- 21:: reformate combustion pipe
- 22:: fuel cell off gas pipe
- 23:: reforming water supply pipe
- 30:: fuel cell
- 31:: power cable
- 40:: control device
- a:: combustion air

- A, B, C:: predetermined temperature for reforming section (third temperature), predetermined temperature for shift converter section (fourth temperature), predetermined temperature for selective oxidation section (fourth temperature) at start-up
- A1, A2:: first temperature, second temperature
- a1, a2:: predetermined amount of decrease and increase in output current
- g, g1: fuel gas, shift-converted gas
- g':: combustion gas
- i1 to i7:: control signal
- m:: raw material fuel
- N1, N2:: number of consecutive times the output current has been decreased or increased
- n1, n2:: predetermined value for the number of consecutive times the output current has been decreased or increased
- r:: reformate
- Ta:: reforming section temperature
- Tb, Tc:: shift converter section temperature (carbon monoxide reduction section temperature), selective oxidation section temperature (carbon monoxide reduction section temperature)
- TI:: temperature detector
- t1, t2:: predetermined time period

### Best Mode for Carrying Out the Invention

Description is hereinafter made of an embodiment of the present invention with reference to the drawings. The same or corresponding devices are denoted in all the drawings with the same reference numerals and symbols, and redundant description is omitted. In FIG. 1, the broken lines represent control signals.

FIG. 1 is a block diagram illustrating a fuel cell power generation system 100 as an embodiment of the present invention. The fuel cell power generation system 100 has a raw material fuel supply section 1 for supplying a raw material fuel m such as city gas or kerosene; a combustion air supply section 2 for supplying combustion air a for combustion of the raw material fuel m; a reforming section 5 for reforming the raw material fuel m to produce hydrogen-rich reformate r; a combustion section 4 for heating the reforming section 5; a shift converter section 6, as a first stage section of a carbon monoxide reduction section, in which a shift converter reaction of the reformate r is carried out; a selective oxidation section 7, as a second stage section of the carbon monoxide reduction section, in which a selective oxidation reaction of shift-converted reformate g1 is carried out; and a fuel cell 30 for generating electric power using hydrogen-rich gas g as carbon monoxide reduced gas as fuel gas. The fuel cell power generation system 100 also has a three-way valve 3 as a first passage-switching means for switching between a passage 13 through which the raw material fuel m supplied from the fuel supply section 1 is supplied to the reforming section 5 and a passage 14 through which the raw material fuel m is supplied to the combustion section 4; and a three-way valve 8 as a second passage-switching means for directing the gas discharged from the selective oxidation section 7 to a passage 20 to the fuel cell 30 as fuel gas g or to a passage 21 to the combustion section 4 as combustion gas g'. The fuel cell power generation system 100 also has a reforming section temperature detector 9 for detecting the temperature in the reforming section 5; a shift converter section temperature detector 10 for detecting the temperature in the shift converter section 6; a selective oxidation section temperature detector 11 for detecting the temperature in the selective oxidation section 7; and a control device 40 for controlling the supply amount of the raw material fuel from the raw material fuel supply section 1 and the operation of the three-way valves 3 and 8 based on those temperatures.

A pipe 12 is installed from the raw material fuel supply section 1 to the three-way valve 3, and is branched into a pipe 13 connected to the reforming section 5 and a pipe 14 connected to the combustion section 4 at the three-way valve 3. A pipe 15 is installed from the combustion air supply section 2 to the combustion section 4. A pipe 16, through which exhaust gas from combustion is discharged, is connected to the combustion section 4. To the reforming section 5 is also connected a pipe 23 through which reforming water s as water for the reforming reaction is supplied thereto. A pipe 17 is installed between the reforming section 5 and the shift converter section 6, and a pipe 18 is installed between the shift converter section 6 and the selective oxidation section 7. A pipe 19 connected to the selective oxidation section 7 is connected to the three-way valve 8, and pipes 20 and 21 extend from the three-way valve 8 to the fuel cell 30 and to a pipe 22, respectively. The pipe 22 is installed between the fuel cell 30 and the combustion section 4.

The raw material fuel supply section 1 is a device for supplying a raw material fuel m such as city gas, LPG, digestion gas, methanol, GTL or kerosene at a constant rate. The raw material fuel supply section 1 may have a tank for storing the raw material fuel m or receive the raw material fuel m from outside. When a pressurized gas such as city gas or LPG is used, the raw material fuel supply section 1 has a flow control valve. When the raw material fuel m is not pressurized, the raw material fuel supply section 1 has a blower for generating a pressure to deliver the raw material fuel into the fuel cell power generation system 100. When the raw material fuel m is a liquid fuel such as GTL or kerosene, the raw material fuel supply section 1 may have a constant rate pump or may have a pump without a flow rate control function and a flow control valve. The raw material fuel supply section 1 increases or decreases the supply amount of the raw material fuel according to a command signal i1 from the control device 40.

The combustion air supply section 2 is a device for supplying oxygen to be consumed by the combustion in the combustion section. It is sufficient that the combustion air supply section 2 has a blower for supplying an ambient air into the combustion section 4 as combustion air a. The combustion air supply section 2 preferably has a filter for preventing entry of floating objects in the ambient air. The combustion air supply section 2 preferably has a flow control valve for controlling the supply rate of the combustion air a. Although the combustion air supply section 2 is connected via the pipe 15 to the combustion section 4 in the fuel cell power generation system 100, it may be directly connected to the combustion section 4.

The reforming section 5 is a device for generating hydrogen-rich reformate r from the raw material fuel m and the reforming water s through a reforming reaction. A reforming reaction is a reaction in which hydrogen, carbon dioxide and carbon monoxide are generated from hydrocarbons in the raw material fuel m and water at a high temperature in the presence of a reforming catalyst (not shown). Since a reforming reaction is an endothermic reaction, heat must be supplied from outside to induce a reforming reaction. As the reforming catalyst, any catalyst can be used as long as it can accelerate the reforming reaction. For example, a nickel-based reforming catalyst or a ruthenium-based reforming catalyst can be used. The reforming section 5 is preferably in the form of a circular cylindrical container housing the reforming catalyst in view of strength and production efficiency. The combustion section 4, which is described later, may be disposed inside the reforming section 5 so that the reforming section 5 can be maintained at a high temperature.

The combustion section 4 is a device in which the raw material fuel m, the combustion gas g' supplied from the selective oxidation section 7 with its carbon monoxide not sufficiently removed, or anode off gas p as off gas from an anode electrode of the fuel cell 30 is burned together with the combustion air a to heat the reforming section 5. The combustion section 4 preferably has a carburetor in case the raw material fuel m is a liquid fuel such as kerosene. The combustion section 4 has a burner nozzle which can be used for various types of fuels including the raw material fuel m, such as kerosene, city gas or LPG, the combustion gas g' discharged from the selective oxidation section 7 and the anode off gas p from the fuel cell 30. The combustion section 4 may have a different burner nozzle for each of the fuels. Since the combustion section 4 is a device for heating the reforming section 5, it is preferably formed integrally with the reforming section 5. The structure of the combustion section 4 is not specifically limited as long as it can heat the reforming section 5. The combustion section 4 may be located at the center of the reforming section 5 so that the reforming section 5 surrounding it can be heated by the combustion therein, or may be so constructed that high-temperature gas produced in the combustion section 4 flows around the reforming section 5 to heat the reforming section 5.

The shift converter section 6 is a device in which carbon dioxide and hydrogen are generated through a shift converter reaction of carbon monoxide with water both in the reformate r in the presence of a shift converter catalyst (not shown). Since the shift converter reaction is an exothermic reaction, when the reaction temperature is lowered, the concentration of carbon monoxide in the shift converter reaction product can be low but the reaction rate decreases. As the shift converter catalyst, an iron-chromium-based high-temperature shift converter catalyst, a platinum-based medium-high-temperature shift converter catalyst, or a copper-zinc-based low temperature shift converter catalyst may be used. The shift converter section 6 is a container housing such a catalyst and typically has a circular cylindrical shape.

The selective oxidation section 7 is a device in which carbon monoxide in the reformate r is subjected to selective oxidation with oxygen in air (not shown) supplied from outside in the presence of a selective oxidation catalyst (not shown) to reduce the concentration of carbon monoxide in the fuel gas g. When the fuel cell 30 is a solid polymer electrolyte fuel cell, the platinum catalyst in the anode electrode (fuel electrode) is poisoned by carbon monoxide in the fuel gas g and the power generation efficiency is decreased. Therefore, a selective oxidation catalyst with high carbon monoxide selective oxidation capacity is used to oxidize carbon monoxide to carbon dioxide. As the selective oxidation catalyst, a platinum-based selective oxidation catalyst or ruthenium-based selective oxidation catalyst, for example, may be used. Although the fuel cell power generation system 100 has the shift converter section 6 and the selective oxidation section 7 to reduce carbon monoxide, only either one of them may be provided as long as the carbon monoxide concentration can be sufficiently decreased. However, the fuel cell power generation system 100 desirably has both the shift converter section 6 and the selective oxidation section 7, because the carbon monoxide concentration can be decreased and the concentration of hydrogen as fuel can be increased in the shift converter section 6, and the carbon monoxide concentration can be sufficiently decreased in the selective oxidation section 7.

The fuel cell 30 is a device in which the hydrogen-rich fuel gas g as fuel gas and oxidant gas such as air are supplied to an anode electrode (not shown) and a cathode electrode (not shown), respectively, to generate electric power. As the fuel cell 30, a solid polymer electrolyte fuel cell is preferred for example, but a fuel cell of a different type may be used. Hydrogen in the fuel gas g supplied to the anode electrode reacts with oxygen in the oxidant gas supplied to the cathode electrode into water vapor. Not all the hydrogen is consumed, and anode off gas p containing residual hydrogen is discharged. Since the amount of hydrogen contained in the anode off gas p is the difference between the amount of hydrogen contained in the fuel gas g and the amount of hydrogen consumed for power generation in the fuel cell 30, the amount of hydrogen in the anode off gas p increases when the output current decreases. The electric power generated in the fuel cell 30 is supplied to an outside consumer (not shown) through a power cable 31. The fuel cell 30 increases or decreases the output current according to a control signal i7 from the control device.

The reforming section 5, the shift converter section 6, and the selective oxidation section 7 have a reforming section temperature detector 9, a shift converter section temperature detector 10, and a selective oxidation section temperature detector 11, respectively, for detecting the temperatures therein. Signal cables for transmitting signals indicating the detected temperatures extend from the reforming section temperature detector 9, the shift converter section temperature detector 10, and the selective oxidation section temperature detector 11 to the control device 40, and a reforming section temperature signal i3, a shift converter section temperature signal i4, and a selective oxidation section temperature signal i5 are transmitted to the control device.

The control device 40 controls the operation of the three-way valves 3 and 8, the output current from the fuel cell 30, and the supply amount of the raw material fuel from the raw material fuel supply section 1 based on the reforming section temperature signal i3, the shift converter section temperature signal i4, and the selective oxidation section temperature signal i5. The control device 40 has a storage section (not shown) for storing a reforming section operation start temperature A (see FIG. 2) as a third temperature, a shift converter section operation start temperature B (see FIG. 2) as a fourth temperature, a selective oxidation section operation start temperature C (see FIG. 2) as another fourth temperature, a reforming section lower limit temperature A1 (see FIG. 3) as a first temperature, and a reforming section higher limit temperature A2 (see FIG. 3) as a second temperature for use in the above control; and a control section (not shown) for controlling the three-way valves 3 and 8, the output current from the fuel cell 30, and the supply amount of the raw material fuel m from the raw material fuel supply section 1 based on the temperatures detected by the reforming section temperature detector 9, the shift converter section temperature detector 10, and the selective oxidation section temperature detector 11. Since the carbon monoxide reduction section of the fuel cell power generation system 100 as the embodiment of the present invention has the shift converter section 6 and the selective oxidation section 7, there are two fourth temperatures: the shift converter section operation start temperature B (see FIG. 2) and the selective oxidation section operation start temperature C (see FIG. 2). In this case, when the shift converter section 6 has a temperature Tb (see FIG. 2) equal to or higher than the shift converter section operation start temperature B (see FIG. 2) and the selective oxidation section 7 has a temperature Tc (see FIG. 2) equal to or higher than the selective oxidation section operation start temperature C (see FIG. 2), the carbon monoxide reduction section (the shift converter section 6 and the selective oxidation section 7) is regarded as having a temperature equal to or higher than a predetermined temperature (the shift converter section operation start temperature B and the selective oxidation section operation start temperature C).

Each of the three-way valves 3 and 8 is a valve as a flow passage-switching means having one entrance and two exits. The three-way valve 3 performs switching operation to supply the raw material fuel m from the raw material fuel supply section 1 either to the combustion section 4 or to the reforming section 5. The three-way valve 8 performs switching operation to supply the gas discharged from the selective oxidation section 7 either to the fuel cell 30 as fuel gas g or to the combustion section 4 as combustion gas g'. Each of the switching means may be formed by a combination of branch pipes and gate valves, not by a three-way valve. When three-way valves are used, however, the fuel cell power generation system 100 can be small in size since three-way valves do not take up a lot of space. The three-way valves 3 and 8 are driven by a solenoid or motor, and operates according to control signals i2 and i6, respectively, from the control device 40.

Although the raw material fuel supply section 1, the combustion air supply section 2, the reforming section 5, the combustion section 4, the shift converter section 6, the selective oxidation section 7 and the three-way valves 3 and 8 are separate devices connected by pipes 12 to 19 in the fuel cell power generation system 100, all or some of the devices may be integrated into a unit as a fuel processing device. When the system is made up of separate devices, each device can undergo maintenance or can be replaced individually, making the system easy to use. When the devices are integrated into a unit, the system can be compact as a whole.

The operation to start the fuel cell power generation system 100 shown in FIG. 1 is described with reference to the flowchart in FIG. 2. The supply of the raw material fuel m from the raw material fuel supply section 1 is started. At this time, the three-way valve 3 permits the raw material fuel m to flow to the combustion section 4. Therefore, the raw material fuel m is supplied through the pipe 12, the three-way valve 3 and the pipe 14 to the combustion section 4. At the same time, the combustion air a is supplied from the combustion air supply section 2 to the combustion section 4. In the combustion section 4, the raw material fuel m injected from the burner nozzle is ignited to start combustion (step ST1).

The reforming section 5 is heated by the heat from the combustion in the combustion section 4 and increases in temperature (step ST2). The steps up to this point correspond to a first preheating process. The control device 40 determines whether the temperature Ta in the reforming section 5 is equal to or higher than the predetermined third temperature A based on a signal i3 indicating the temperature detected by the reforming section temperature detector 9 (step ST3). The third temperature A is higher than the temperature at which a reforming reaction of the raw material fuel m occurs. For example, when the reforming reaction of the raw material fuel m occurs at 650°C, the third temperature A is set to 700°C. If the temperature Ta in the reforming section 5 is equal to or higher than the third temperature A, the control section (not shown) of the control device 40 sends a signal i2 to the three-way valve 3 to command the three-way valve 3 to supply the raw material fuel m to the reforming section 5 (step ST4).

When the raw material fuel m is supplied to the reforming section 5 by the three-way valve 3, the combustion in the combustion section 4 is stopped since no fuel for combustion is supplied. Since the reforming section 5 has been heated to a temperature equal to or higher than the third temperature A, which is higher than the temperature at which the raw material fuel m undergoes a reforming reaction, the raw material fuel m undergoes a reforming reaction and is reformed into hydrogen, carbon monoxide and carbon dioxide. Although the supply of heat from the combustion section 4 is stopped, since the container (not shown) of the reforming section and the reforming catalyst (not shown) have accumulated heat, the temperature in the reforming section 5 decreases slowly. Also, since the reforming section 5 has been heated to a temperature equal to or higher than the third temperature A, which is higher than the temperature at which a reforming reaction of the raw material fuel m occurs, the reforming reaction continues even if the temperature slightly decreases. The reformate r generated through the reforming reaction is supplied through the pipe 17 to the shift converter section 6. At this time, even if the reformate r is supplied to the shift converter section 6, no shift converter reaction occurs since the temperature in the shift converter section 6 is low. However, since the reformate r with a high temperature is supplied, the temperature in the shift converter section 6 increases gradually. Then, the reformate r is supplied from the shift converter section 6 to the selective oxidation section 7 through the pipe 18. No selective oxidation reaction of carbon monoxide occurs in the selective oxidation section 7 since the temperature in the selective oxidation section 7 is low. The temperature in the selective oxidation section 7 also increases gradually as the reformate r with a high temperature is supplied.

The reformate r, having heated the shift converter section 6 and the selective oxidation section 7, flows through the pipe 19 to the three-way valve 8. The reformate r, which has undergone neither a shift converter reaction nor a selective oxidation reaction of carbon monoxide, contains a large amount of carbon monoxide and is not suitable to be supplied to the fuel cell 30. The reformate r is therefore directed to the pipe 21 as combustion gas g' by the three-way valve 8 and supplied through the pipe 22 to the combustion section 4. In the combustion section 4, combustion is started using the combustion gas g' and the combustion air a (step ST5). That is, combustion in the combustion section 4 is stopped only for the period between when the three-way valve 3 is switched from the pipe 14 side to the pipe 13 side and when the raw material fuel m supplied to the reforming section 5 as a result of the switching is reformed and supplied to the combustion section 4 through the shift converter section 6, the selective oxidation section 7 and the three-way valve 8. This period is approximately 10 seconds. Since combustion in the combustion section 4 is stopped for the short period of time, even if the raw material fuel m undergoes a reforming reaction in the reforming section 5 and the temperature in the reforming section 5 decreases, the temperature does not decrease from a temperature equal to or higher than the third temperature A to a temperature lower than the temperature at which a reforming reaction of the raw material fuel m occurs and thus the reforming reaction continues. As the reforming reaction continues, the shift converter section 6 and the selective oxidation section 7 are kept heated (step ST6). The steps up to this point correspond to a second preheating step.

The shift converter section temperature detector 10 and the selective oxidation section temperature detector 11 detect the temperatures in the shift converter section 6 and the selective oxidation section 7, respectively, which are kept heated. The detected temperature Tb of the shift converter section 6 and the detected temperature Tc of the selective oxidation section 7 are transmitted as signals i4 and i5, respectively, to the control device 40. The control section (not shown) of the control device 40 compares the shift converter section temperature Tb with the temperature B as the predetermined fourth temperature stored in the storage section and the selective oxidation section temperature Tc with the temperature C as the other predetermined fourth temperature stored in the storage section (step ST7). The temperature B is the temperature at which a shift converter reaction is carried out in the shift converter section 6, and the temperature C is the temperature at which a selective oxidation reaction of carbon monoxide is carried out in the selective oxidation section 7. For example, when a copper-zinc-based shift converter catalyst and a platinum-based selective oxidation catalyst are used, since the temperature suitable for the shift converter reaction is 200 to 280°C, the fourth temperature B is set to 240°C, and since the temperature suitable for the selective oxidation reaction of carbon monoxide is 100 to 160°C, the fourth temperature C is set to 110°C. At the same time, it is checked whether the reforming section temperature Ta is equal to or higher than the third temperature A. This is to maintain the temperature in the reforming section 5 high so that the temperature in the reforming section 5 will not decrease to a temperature equal to or lower than the temperature at which the reforming reaction occurs while combustion is stopped in the combustion section 4 after the three-way valve 8 has been switched to shut off the supply of combustion gas g' from the selective oxidation section 7 to the combustion section 4 through the three-way valve 8 and the pipes 21 and 22. Since the period between when the combustion section 4 is extinguished and when off gas p is supplied from the fuel cell 30 and combustion is restarted is different from the period in the case of switching the three-way valve 3, the temperature to be compared with the reforming section temperature Ta may be different from the third temperature A. In the fuel cell power generation system 100 of this embodiment, since the period until the restart of combustion after the switching of the three-way valve 8 is shorter than the period until the restart of combustion after the switching of the three-way valve 3, the temperature to be compared with the reforming section temperature Ta may be lower than the third temperature A.

When the detected temperatures Tb and Tc are equal to or higher than the predetermined temperatures B and C, respectively, the reformate r is shift-converted into shift-converted gas g1 through a shift converter reaction in the shift converter section 6 and the shift-converted gas g1 is converted into fuel gas g with a sufficiently reduced carbon monoxide content through a selective oxidation reaction of carbon monoxide in the selective oxidation section 7. Then, the control section (not shown) of the control device 40 sends a signal i6 to the three-way valve 8 to command the three-way valve 8 to supply the gas from the selective oxidation section 7 to the fuel cell 30 (step ST8). When the three-way valve 8 is switched, the supply of combustion gas g' to the combustion section 4 is shut off and the combustion in the combustion section 4 is stopped. However, the fuel gas g supplied to the fuel cell 30 is not immediately used for power generation in the fuel cell 30 but supplied to the combustion section 4 through the pipe 22 as anode off gas p. The fuel cell 30 may start power generation to generate only a small amount of current when the fuel gas g is supplied to the fuel cell 30. Then, combustion is started in the combustion section 4 using the anode off gas p, which has the same component as the fuel gas g but is supplied through the pipe 22, and the combustion air a (step ST9). Since the anode off gas with the same component as the fuel gas g has a high hydrogen concentration, it can be ignited easily. The period of time needed for this process is as short as about five seconds. Therefore, even though the combustion in the combustion section 4 is stopped, the decrease in temperature in the reforming section 5 is small and the reforming reaction continues.

When the combustion of anode off gas p with the same component as the fuel gas g is started in the combustion section 4, the temperature in the reforming section 5 becomes stable. The raw material fuel m is reformed in the reforming section 5, reduced in carbon monoxide content in the shift converter section 6 and the selective oxidation section 7, and supplied to the fuel cell 30. Then, the output current is increased in steps and steady power generation takes place in the fuel cell 30 (step ST10). The steps up to this point correspond to a power generation process. After power generation has been stated in the fuel cell 30, the fuel gas g is used for the power generation in the fuel cell 30 and the anode off gas p from the fuel cell 30 is supplied through the pipe 22 to the combustion section 4 to maintain the combustion in the combustion section 4. Since the fuel gas g to be supplied to the fuel cell 30 has undergone a shift converter reaction and a selective oxidation reaction of carbon monoxide, it has a sufficiently low carbon monoxide concentration. Therefore, even when the fuel gas g is supplied to the fuel cell 30, it does not poison the platinum catalyst in the anode electrode (fuel electrode) of the fuel cell 30 and is suitably used in the fuel cell 30.

According to the above start-up method, the fuel cell power generation system 100 can be started without using an assist combustion system and the fuel cell 30 and so on cannot be damaged by carbon monoxide. Since the raw material fuel m is not burned except when some raw material fuel m is supplied to the combustion section 4 to heat the reforming section 5 at the beginning and since the reformate r or the anode off gas p is burned in the combustion section 4, the exhaust gas discharged from the combustion section 4 is clean and free of NOx or SOx. This is advantageous from the viewpoint of environmental protection.

With reference to FIG. 3, description is made of a method for controlling the fuel cell power generation system 100 shown in FIG. 1 against disturbances. For example, the temperature in the reforming section 5 may be varied by the pointing error of a raw material fuel flow meter or the fluctuation of the quality of the raw material fuel m. When the temperature in the reforming section 5 varies largely, the reforming reaction may not proceed properly. Therefore, an adjustment must be made to maintain the temperature in the reforming section 5 within a predetermined range.

One possible method to increase the temperature in the reforming section 5 when the temperature in the reforming section 5 has decreased is to increase the amount of combustion in the combustion section 4. However, if the supply amount of the raw material fuel m is increased to increase the amount of combustion in the combustion section 4, the reforming reaction in the reforming section 5 is accelerated and more heat is absorbed. As a result, the temperature in the reforming section 5 further decreases. Moreover, since the reforming reaction requires reforming water s, the supply amount of reforming water s must be increased with the increase of the supply amount of the raw material fuel m. As a result, the fluctuation in the entire system may increase and the operation of the system may become unstable.

Therefore, when the temperature in the reforming section 5 has decreased, the output current from the fuel cell 30 is decreased. When the output current is decreased, the consumption of hydrogen in the fuel cell 30 decreases. As a result, the amount of residual hydrogen in the anode off gas p increases. When the residual hydrogen amount in the anode off gas p increases, the amount of combustion in the combustion section 4 increases and the temperature in the reforming section 5 increases. On the other hand, when the temperature in the reforming section 5 has increased, the output current from the fuel cell 30 is increased. Then, the amount of residual hydrogen in the anode off gas p decreases, and the amount of combustion in the combustion section 4 decreases. As a result, the temperature in the reforming section 5 decreases. Since the amount of combustion in the combustion section 4 varies immediately after the output current from the fuel cell 30 is increased or decreased, the temperature in the reforming section 5 changes quickly. Therefore, this method is suitable as a method for controlling the operation of the fuel cell power generation system 100.

Referring to FIG. 3, a specific control operation is described. The temperature detected by the reforming section temperature detector 9 is sent as a signal i3 to the control section of the control device 40. In the control section, the detected reforming section temperature Ta is compared with a predetermined first temperature A1 stored in the storage section (step ST11). If the reforming section temperature Ta is equal to or lower than the first temperature A1, a process of decreasing the output current from the fuel cell 30 is carried out. If the reforming section temperature Ta is higher than the first temperature A1, the reforming section temperature Ta is compared with a predetermined second temperature A2.

In the process of decreasing the output current from the fuel cell 30, the control section of the control device 40 resets the number of consecutive times N2 the output current has been increased to 0 (step ST21). This is not to miscount the number of consecutive times N2 the output current is increased when a process of increasing the output current must be performed after the output current is decreased. Although step ST21 is shown as the first step in the process of decreasing the output current in FIG. 3, the step may be conducted at any time during the process of decreasing the output current.

Then, the control section of the control device 40 sends a command signal i7 to decrease the output current by a predetermined amount a1 to the fuel cell 30. When the fuel cell 30 receives the command signal i7, the output current is decreased (step ST22). The predetermined amount a1 by which the output current is decreased is set to a small value, such as 2% of the amount of output current set at the start-up of the system. A large or sudden change in the amount of output current may make the operation of the system unstable. The predetermined amount a1 is therefore set to a small value so that the output current can be adjusted gradually.

The control section of the control device 40 then adds 1 to the number of consecutive times N1 the output current has been decreased (step ST24). As described later, this is used to determine whether to increase the supply amount of the raw material fuel m when the temperature Ta in the reforming section 5 does not become higher than the predetermined first temperature A1 even if the output current is decreased. If the number of consecutive times N1 has not reached a predetermined value n1, the process flow returns to the comparison between the reforming section temperature Ta and the first temperature A1 (step 11).

Before the comparison between the reforming section temperature Ta and the first temperature A1 is made again (step 11), the state in which the output current is decreased is maintained for a predetermined time period t1. Thus, the control section of the control device 40 measures the predetermined time period t1 with a timer (step ST23). This is to stabilize the state in which the output current is decreased by the predetermined amount a1. That is, this is because when additional control is performed based on the transient changes after a decrease in the output current, the operation of the system may be unstable. Especially, when the thermal capacity of the reforming section 5 is large relative to the decrease in the amount of combustion, continuous feedback control as in a PID control method may cause hunting of the temperature in the reforming section 5. As the predetermined time period t1, about 30 seconds is enough for a small-size fuel cell power generation system 100 with a power generation capacity of 1 to 5 kW. It is unlikely that a significant change which has an adverse effect on the operation of the system occurs within the predetermined time period t1. The steps up to this point correspond to an output current decreasing process.

The process to be carried out when the reforming section temperature Ta is higher than the first temperature A1 is described below. The control section of the control device 40 compares the reforming section temperature Ta with the predetermined second temperature A2 (step ST12). If the reforming section temperature Ta is not equal to nor higher than the second temperature A2, the temperature in the reforming section 5 is determined to be in an appropriate range and the operation is continued as it is. If the reforming section temperature Ta is equal to or higher than the second temperature A2, an output current increasing process is performed. The output current increasing process is performed to increase the consumption of hydrogen in the fuel cell 30 and to decrease the amount of hydrogen in the anode off gas p in order to suppress the combustion in the combustion section 4.

In the output current increasing process, the number of consecutive times N1 the output current has been decreased is reset to 0 (step ST31), the output current is increased by a predetermined amount a2 (step ST32), and 1 is added to the number of consecutive times N2 the output current has been increased (step ST34). Before the comparison between the reforming section temperature Ta and the first temperature A1 is made again (step 21), the state in which the output current is increased is maintained for a predetermined time period t2 (step ST33). The details of these steps are similar to those of the steps in the output current decreasing process and hence their description is omitted. The predetermined amount a1 by which the output current is decreased and the predetermined amount a2 by which the output current is increased may be equal to or different from each other. The predetermined time period t1 for which the state in which the output current is decreased is maintained and the predetermined time period t2 for which the state in which the output current is increased is maintained may be equal to or different from each other.

The operation in the case where the number of consecutive times N1 the output current has been decreased reaches a predetermined value n1 or the number of consecutive times N2 the output current has been increased reaches a predetermined value n2 is described below. The number of consecutive times N1 the output current has been decreased is the number of times the reforming section temperature Ta did not exceed the second temperature A2 and became equal to or lower than the first temperature A1 again after the output current had been decreased. That is, it is the number of times the situation has occurred in which the output current was decreased to increase the amount of hydrogen in the anode off gas p but the combustion in the combustion section 4 was still insufficient and the temperature in the reforming section 5 decreased. If the output current is decreased many times, the output from the fuel cell 30 may largely decrease until it does not meet the external demand for electricity.

Thus, when the number of consecutive times N1 the output current has been decreased reaches the predetermined value n1, the supply amount of the raw material fuel m from the raw material fuel supply section 1 is increased to increase the amount of anode off gas p and accelerate the combustion in the combustion section 4 so that the temperature in the reforming section 5 can be increased. When the supply amount of the raw material fuel m is increased, the supply amount of the reforming water s to the reforming section 5 must be increased. Then, the temperature in the reforming section 5 temporarily decreases. However, since the amount of combustion in the combustion section 4 increases, the temperature in the reforming section 5 increases gradually. As described above, the system has a function of controlling the supply amount of the raw material fuel m which can be used when the control of the output current does not work well. Therefore, the reliability for steady operation of the system is enhanced. For example, when the amount by which the output current is decreased is 2% of the output current at start-up and the predetermined value n1 is 5, the supply amount of the raw material fuel m is increased in the case that the output current decreases by 10%. Therefore, the fluctuation of the output current is kept within 10%. At this time, when the amount by which the supply amount of the raw material fuel m is increased is 10% of the amount of fuel needed at start-up, the supply amount of the raw material fuel m is kept within an appropriate range.

Referring to the flowchart in FIG. 3, a specific operation control method is described. It is determined in the control section of the control device 40 whether the number of consecutive times N1 the output current has been decreased has become equal to the predetermined value n1 (step ST25) . When the number of consecutive times N1 the output current has been decreased has become equal to the predetermined value n1, the control section of the control device 40 sends a control signal i1 to the raw material fuel supply section 1 to increase the flow rate of the raw material fuel by a predetermined amount f1. On receiving the command signal i1, the raw material fuel supply section 1 increases the flow rate of the raw material fuel (step 26) by increasing the delivery rate of the constant volume pump or by adjusting the flow rate with the flow control valve. At the same time as increasing the flow rate of the raw material fuel, the control section of the control device 40 resets the number of times N1 the output current has been decreased to 0 (step ST27) . Then, the process flow returns to the comparison between the reforming section temperature Ta and the first temperature A1 (step ST11). Before the comparison, the state in which the output current is decreased and the supply amount of the raw material fuel m is increased is maintained for the predetermined time period t1. Thus, the control section of the control device 40 measures the predetermined time period t1 with a timer (step ST23). This is to secure a period during which the operation after the decrease of the output current and the increase of the supply amount of the raw material fuel m is stabilized.

When the number of consecutive times N2 the output current has been increased has reached to the predetermined value n2, the supply amount of the raw material fuel m from the raw material fuel supply section 1 is decreased (step ST36) in contrast to the case where the number of consecutive times N1 the output current has been decreased has reached the predetermined value n1, and the number of times N2 the output current has been increased is reset to 0 (step ST37). Then, the supply amount of the raw material fuel m decreases, and the supply amount of the reforming water s decreases. As a result, the amount of combustion in the combustion section 4 decreases and the temperature in the reforming section 5 decreases. The details of these steps are similar to those of the steps in the process of increasing the supply amount of the raw material fuel m and hence their description is omitted.

As has been described previously, when the number of consecutive times N1 the output current has been decreased reaches a predetermined value n1 or when the number of consecutive times N2 the output current has been increased reaches a predetermined value n2, the supply amount of the raw material fuel m is adjusted to maintain the output current from the fuel cell 30 within a fixed range. Therefore, the fuel cell power generation system 100 can meet the external demand for electricity.

## Claims

1. A method for operating a fuel cell power generation system having a reforming section for reforming a raw material fuel to produce reformate; a combustion section for burning the raw material fuel to heat the reforming section; a carbon monoxide reduction section for reducing a content of carbon monoxide in the reformate to produce carbon monoxide reduced gas; and a fuel cell which uses the carbon monoxide reduced gas as fuel gas, the method comprising:
a first preheating process of supplying the raw material fuel to the combustion section to heat the reforming section to a predetermined temperature;
a second preheating process, following the first preheating process, including the steps of stopping the supply of the raw material fuel to the combustion section, supplying the raw material fuel to the reforming section to produce reformate, and introducing the reformate to the carbon monoxide reduction section to heat the carbon monoxide reduction section; and
a power generation process, after the second preheating process, of introducing the carbon monoxide reduced gas generated in the carbon monoxide reduction section to the fuel cell to generate electric power.

2. The method for operating a fuel cell power generation system according to Claim 1, wherein process flow proceeds from the second preheating process to the power generation process when a temperature of the carbon monoxide reduction section becomes equal to or higher than a predetermined value.

3. A method for operating a fuel cell power generation system having a raw material fuel supply section for supplying a raw material fuel; a reforming section for reforming the raw material fuel to produce reformate; a carbon monoxide reduction section for reducing a content of carbon monoxide in the reformate to produce carbon monoxide reduced gas; a fuel cell which uses the carbon monoxide reduced gas as fuel gas; and a combustion section for burning off gas from the fuel cell to heat the reforming section, the method comprising:
a reforming section temperature comparing process including the steps of detecting a temperature in the reforming section and comparing the detected temperature with predetermined first and second temperatures;
a current decreasing process for decreasing an output current from the fuel cell when the detected temperature is equal to or lower than the first temperature in the reforming section temperature comparing process and maintaining the output current for a predetermined time period after the output current has been decreased; and
a current increasing process of increasing the output current from the fuel cell when the detected temperature is equal to or higher than the second temperature in the reforming section temperature comparing process and maintaining the output current for a predetermined time period after the output current has been increased.

4. The method for operating a fuel cell power generation system according to Claim 3, further comprising:
a fuel increasing process of increasing the supply amount of the raw material fuel from the raw material fuel supply section when a number of consecutive times the current decreasing process has been carried out reaches a predetermined value; and
a fuel decreasing process of decreasing the supply amount of the raw material fuel from the raw material fuel supply section when a number of consecutive times the current increasing process has been carried out reaches a predetermined value.

5. A fuel cell power generation system, comprising:
a raw material fuel supply section for supplying a raw material fuel;
a reforming section for reforming the raw material fuel to produce reformate;
a carbon monoxide reduction section for reducing a content of carbon monoxide in the reformate to produce carbon monoxide reduced gas;
a fuel cell which uses the carbon monoxide reduced gas as fuel gas;
a combustion section for burning the raw material fuel, the carbon monoxide reduced gas or off gas from the fuel cell to heat the reforming section;
a passage through which the raw material fuel is supplied to the combustion section;
a passage through which the raw material fuel is supplied to the reforming section;
a passage through which the carbon monoxide reduced gas is supplied to the fuel cell;
a passage through which the carbon monoxide reduced gas is supplied to the combustion section;
a passage through which the off gas from the fuel cell is supplied to the combustion section;
a first passage-switching means for switching between the passage through which the raw material fuel is supplied to the combustion section and the passage through which the raw material fuel is supplied to the reforming section; and
a second passage-switching means for switching between the passage through which the carbon monoxide reduced gas is supplied to the fuel cell and the passage through which the carbon monoxide reduced gas is supplied to the combustion section.

6. The fuel cell power generation system according to Claim 5, further comprising:
a reforming section temperature detector for detecting a temperature in the reforming section;
a carbon monoxide reduction section temperature detector for detecting a temperature in the carbon monoxide reduction section; and
a control device having
a storage section for storing first, second and third temperatures to be compared with the temperature detected by the reforming section temperature detector and a fourth temperature to be compared with the temperature detected by the carbon monoxide reduction section temperature detector, and
a control section which, at start-up, conducts control to carry out the steps of stopping supply of the raw material fuel to the combustion section, supplying the raw material fuel to the reforming section to produce reformate, and introducing the reformate to the carbon monoxide reduction section to heat the carbon monoxide reduction section when the temperature detected by the reforming section temperature detector becomes equal to or higher than the third temperature after supplying the raw material fuel to the combustion section, and the step of introducing the carbon monoxide reduced gas produced in the carbon monoxide reduction section to the fuel cell to start power generation when the temperature detected by the carbon monoxide reduction section temperature detector becomes equal to or higher than the fourth temperature; and which, during normal operation, conducts control to carry out the steps of decreasing an output current from the fuel cell and maintaining the output current for a predetermined time period after the step of decreasing the output current when the temperature detected by the reforming section temperature detector is equal to or lower than the first temperature, the steps of increasing the output current from the fuel cell and maintaining the output current for a predetermined time period after the step of increasing the output current when the temperature detected by the reforming section temperature detector is equal to or higher than the second temperature, and the steps of increasing or decreasing supply amount of the raw material fuel from the raw material fuel supply section when a number of consecutive times the output current has been decreased or increased reaches a predetermined value.
